# EUROPÄISCHE PATENTSCHRIFT

(11) **EP 3 110 627 B1**
(45) Veröffentlichungstag und Bekanntmachung des Hinweises auf die Patenterteilung: **06.06.2018**
(21) Anmeldenummer: 15706423.9
(22) Anmeldetag: 19.02.2015
(51) Int. Cl.: B44C 1/22, B44C 1/24, B60R 13/02

(54) **DEKORELEMENT FÜR DEN INNENRAUM EINES FAHRZEUGS SOWIE VERFAHREN ZUM HERSTELLEN EINES SOLCHEN DEKORELEMENTS**
TRIM ELEMENT FOR THE INTERIOR OF A VEHICLE AND METHOD FOR PRODUCING A TRIM ELEMENT OF THIS TYPE
ÉLÉMENT DÉCORATIF POUR L'ESPACE INTÉRIEUR D'UN VÉHICULE ET PROCÉDÉ DE PRODUCTION D'UN TEL ÉLÉMENT DÉCORATIF

(30) Priorität: 28.02.2014 DE 102014203641
(43) Veröffentlichungstag der Anmeldung: 04.01.2017
(73) Patentinhaber: Bayerische Motoren Werke Aktiengesellschaft, 80809 München (DE)
(72) Erfinder: BOHLINGER, Daniela, 80339 Muenchen (DE); MALER, Frauke, 79410 Badenweiler (DE)
(86) Internationale Anmeldenummer: PCT/EP2015/053450
(87) Internationale Veröffentlichungsnummer: WO 2015/128240

(56) Entgegenhaltungen:
- WO-A1-2011/143471
- WO-A2-00/46045
- DE-A1- 19 607 051
- FR-A1- 2 899 147
- US-A- 1 653 481

## Beschreibung

Die Erfindung betrifft ein Dekorelement für den Innenraum eines Fahrzeugs gemäß dem Oberbegriff von Patentanspruch 1.

Aus der WO 2011/143471 A1 ist bereits ein Dekorelement für den Innenraum eines Fahrzeugs bekannt, das ein Dekorteil umfasst, das unter anderem aus Holz bestehen kann. Das Dekorteil weist eine dem Innenraum zugewandte und von sich im Innenraum aufhaltenden Fahrzeuginsassen optisch wahrnehmbare Oberfläche auf. Diese Oberfläche kann mit einem Laser bearbeitet sein.

Aus dem allgemeinen Stand der Technik und insbesondere aus dem Serienfahrzeugbau sind Dekorelemente für Fahrzeuginnenräume sowie Verfahren zum Herstellen derartiger Dekorelemente bereits hinlänglich bekannt. Ein solches Dekorelement weist üblicherweise wenigstens ein Dekorteil auf, welches aus Holz gebildet ist. Bezogen auf einen Montagezustand beziehungsweise einen Endmontagezustand des Dekorelements weist das Dekorteil zumindest eine dem Innenraum zugewandte Oberfläche auf. Unter dem "Montagezustand" beziehungsweise dem "Endmontagezustand" ist ein Zustand des Dekorelements zu verstehen, in dem das Dekorelement fertig verbaut, das heißt fertig montiert und beispielsweise an wenigstens einem Halteelement befestigt und im Innenraum des Fahrzeugs angeordnet ist.

In diesem Zustand ist die Oberfläche dem Innenraum zugewandt, so dass Insassen des Fahrzeugs die Oberfläche optisch wahrnehmen, das heißt sehen können. Das Dekorelement dient beispielsweise dazu, ein optisch ansprechendes Design des Innenraums zu schaffen sowie Öffnungen und/oder Trägerelemente des Fahrzeugs zu verkleiden, das heißt zu überdecken. Dies wird üblicherweise auch als "Kaschieren" bezeichnet, so dass das Dekorteil üblicherweise auch als "Kaschierung" bezeichnet wird. Üblicherweise ist das Dekorteil besonders dünn und auf einen eigensteifen Träger des Dekorelements kaschiert. Dies bedeutet, dass das Dekorteil beispielsweise an einem eigensteifen und somit stabilen Träger des Dekorelements befestigt sein kann.

Es hat sich gezeigt, dass nur einige wenige Hölzer geeignet sind, um aus diesen Hölzern Dekorteile herstellen zu können. Zudem kommt es üblicherweise bei der Herstellung von Dekorteilen zu einer sehr hohen Ausschussmenge. Daraus resultieren hohe Herstellungskosten.

Aufgabe der vorliegenden Erfindung ist es daher, ein Dekorelement und ein Verfahren der eingangs genannten Art derart weiterzuentwickeln, dass sich eine besonders einfache und kostengünstige Herstellung von Dekorelementen realisieren lässt.

Diese Aufgabe wird durch ein Dekorelement mit den Merkmalen des Patentanspruchs 1. Vorteilhafte Ausgestaltungen mit zweckmäßigen und nicht-trivialen Weiterbildungen der Erfindung sind in den übrigen Ansprüchen angegeben.

Um ein Dekorelement der im Oberbegriff des Patentanspruchs 1 angegebenen Art derart weiterzuentwickeln, dass sich eine besonders einfache und kostengünstige Herstellung realisieren lässt, ist es erfindungsgemäß vorgesehen, dass zumindest ein Teilbereich der Oberfläche des Dekorteils mit einer Oberflächenstrukturierung versehen ist, wobei die Oberflächenstrukturierung mittels wenigstens eines Lasers und/oder durch Prägen ausgebildet ist. Durch das Prägen kann die Oberflächenstrukturierung beispielsweise durch Druck, insbesondere durch Druck und Wärme, in die Oberfläche eingebracht werden. Mittels des Prägens kann die Oberflächenstrukturierung somit mechanisch hergestellt werden. Beispielsweise ist es möglich, durch Prägen und/oder mit Hilfe des Lasers eine Grafik oder ein Muster zu erzeugen.

Durch das Prägen beziehungsweise mit Hilfe des wenigstens einen Lasers ist es möglich, für die Herstellung des Dekorteils auch solche Hölzer zu verwenden, welche üblicherweise keine oder eine nur sehr geringe Oberflächenstruktur, das heißt eine besonders glatte Oberfläche aufweisen und sich daher bislang nicht für den Einsatz im Automobilbereich eignen. Durch Lasern und/oder Prägen ist es dabei möglich, eine besonders vorteilhafte Oberflächenstruktur auf einfache Weise herzustellen, wobei auch Hölzer mit einer hohen Verfügbarkeit verwendet werden können. Somit ist es möglich, zur Herstellung von Dekorteilen schnell und lokal wachsende sowie günstige Hölzer zu verwenden und Dekorteile mit einem nur geringen Ausschuss herzustellen. Damit ist ein nachhaltiger und effizienter Einsatz von nachwachsenden Ressourcen darstellbar.

War bisher nur der Einsatz von beispielsweise kostenintensiver Pappelmaser, Eschemaser und Nussbaumwurzel im Automobilbereich möglich, ist es nun vorteilhafterweise möglich, Hölzer wie Fichte, Buche, Birke, Lärche, Douglasie, Erle, Linde, Olivesche und Pappel zu verwenden und die jeweilige Oberfläche mittels wenigstens eines Lasers und/oder durch Prägen zu bearbeiten.

Das Dekorteil weist in dem Teilbereich eine geringere Wanddicke als in einem sich an den Teilbereich anschließenden, weiteren Bereich und/oder wenigstens eine Durchgangsöffnung auf. Beispielsweise kann mittels des Lasers beziehungsweise durch das Prägen wenigstens ein Durchbruch der Oberfläche erzeugt werden.

Dabei ist es vorgesehen, dass auf einer der Oberfläche abgewandten Seite zumindest ein Farbelement des Dekorelements in Überdeckung mit dem Teilbereich angeordnet ist. Mit anderen Worten ist es möglich, den Teilbereich farbig zu unterlegen und dadurch von dem sich an den Teilbereich anschließenden Bereich abzusetzen, so dass beispielsweise die Farbe des Farbelements durch die Durchgangsöffnung beziehungsweise die geringe Wanddicke hindurch scheint. Dadurch erscheint der Bereich der geringeren Wanddicke beziehungsweise des Durchbruchs noch intensiver. Zusätzlich ist es möglich, dass das Dekorteil zumindest in dem Teilbereich gebeizt ist. Durch das Aufbringen wenigstens einer Beize können bedarfsgerecht Farben erzeugt werden, so dass die Oberfläche alternativ oder zusätzlich zu dem farblichen Hinterlegen farblich variiert werden kann.

Zur Realisierung einer einfachen und kostengünstigen Herstellung des Dekorelements ist vorgesehen, dass zumindest ein Teilbereich der Oberfläche mittels eines Lasers und/oder durch Prägen mit einer Oberflächenstrukturierung versehen wird. Vorteilhafte Ausgestaltungen des erfindungsgemäßen Dekorelements sind als vorteilhafte Ausgestaltungen des erfindungsgemäßen Verfahrens anzusehen und umgekehrt.

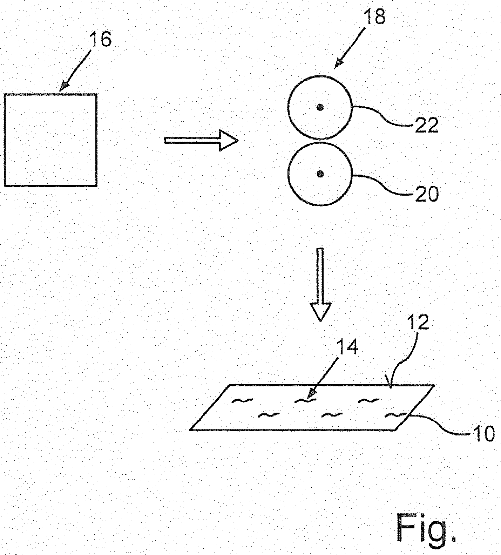

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Fig. eine schematische Darstellung eines Verfahrens zum Herstellen eines Dekorelements für den Innenraum eines Fahrzeugs, wobei eine Oberfläche eines Dekorteils des Dekorelements zumindest in einem Teilbereich mittels eines Lasers und/oder durch Prägen mit einer Oberflächenstrukturierung versehen wird und wobei das Dekorteil aus Holz hergestellt wird.

Die Fig. zeigt in einer schematischen Darstellung ein Verfahren zum Herstellen eines Dekorelements für den Innenraum eines Fahrzeugs, insbesondere eines Kraftwagens. Das Dekorelement weist dabei wenigstens ein aus Holz gebildetes Dekorteil 10 auf. Das Dekorteil 10 wiederum weist zumindest eine Oberfläche 12 auf. Bei der Oberfläche 12 handelt es sich um eine sogenannte Sichtfläche, die bezogen auf einen Montagezustand des Dekorelements dem Innenraum des Fahrzeugs zugewandt und demzufolge von sich im Innenraum aufhaltenden Fahrzeuginsassen optisch und haptisch wahrnehmbar ist. Dies bedeutet, dass die Fahrzeuginsassen die Oberfläche 12 sehen und berühren können, wenn sie sich im Innenraum aufhalten und das Fahrzeug fertig hergestellt ist. Aus der Fig. ist erkennbar, dass das Dekorteil 10 zumindest in einem Teilbereich eine mit 14 bezeichnete Oberflächenstrukturierung aufweist. Durch diese Oberflächenstrukturierung kann eine besonders vorteilhafte Optik und Haptik des Dekorteils 10 und somit des Dekorelements insgesamt realisiert werden.

Das Dekorteil 10 weist beispielsweise eine besonders geringe Dicke auf, so dass es an einem stabilen und eigensteifen und in der Fig. nicht dargestellten Träger des Dekorelements befestigt wird. Zumindest ein Teilbereich des Trägers ist dadurch mittels des Dekorteils 10 überdeckt, so dass das Dekorelement insgesamt einerseits eine besonders hohe Stabilität und andererseits eine hohe optische und haptische Anmutung aufweist. Dadurch ist es beispielsweise möglich, Halteelemente und/oder Öffnungen oder dergleichen des Fahrzeugs mittels des Dekorelements sicher abzudecken.

Zur Realisierung einer besonders effizienten, einfachen und kostengünstigen Herstellung des Dekorelements wird zunächst ein aus dem Holz gebildetes Halbzeug 16 bereitgestellt, aus welchem das Dekorteil 10 hergestellt wird und welches als Flächenelement ausgebildet ist. Das Halbzeug 16 wird beispielsweise einem Walzwerkzeug 18 zugeführt, welches eine erste Walze 20 aufweist, die als Führungs- und Abstützwalze ausgebildet ist. Das Walzwerkzeug 18 umfasst auch eine zweite Walze 22, die als Prägewalze ausgebildet ist. Das Halbzeug 16 wird zwischen den Walzen 20, 22 hindurchgeführt. Mittels der Walze 20 wird die Oberflächenstrukturierung 14 in das Halbzeug 16 eingeprägt. Hierbei auf das Halbzeug 16 wirkende Kräfte werden mittels der Walze 22 abgestützt. Anschließend wird das Halbzeug 16 beispielsweise beschnitten, wobei das Dekorteil 10 ausgeschnitten wird. Weist das Halbzeug 16 eine hinreichend große Fläche auf, so können zwei oder mehr Dekorteile 10 aus dem Halbzeug 16 ausgeschnitten und entsprechend hergestellt werden.

Mittels des Walzwerkzeugs 18 wird die Oberflächenstrukturierung 14 hergestellt, so dass die Oberflächenstrukturierung 14 durch Prägen ausgebildet wird. Durch das Verwenden des Walzwerkzeugs 18 ist eine besonders zeitgünstige Herstellung einer Vielzahl von Dekorelementen möglich, da eine Vielzahl von Halbzeugen oder Endlosmaterial zumindest im Wesentlichen kontinuierlich durch das Walzwerkzeug 18, das heißt zwischen den Walzen 20 und 22 hindurch gefördert werden kann.

Alternativ oder zusätzlich ist der Einsatz wenigstens eines Lasers möglich, mittels welchem die Oberflächenstrukturierung 14 ausgebildet wird. Mit anderen Worten ist es möglich, die Oberflächenstrukturierung 14 durch Lasern beziehungsweise mit Hilfe wenigstens eines Lasers herzustellen.

Mit Hilfe des Lasers beziehungsweise durch das Prägen können auch Hölzer wie Fichte, Buche, Birke, Lärche, Douglasie, Erle, Linde, Olivesche und Pappel verwendet und mit einer erwünschten und vorteilhaften Oberflächenstrukturierung versehen werden, so dass sich auch diese Hölzer für den Einsatz in einem Innenraum eines Fahrzeugs verwenden lassen. Durch Prägen, insbesondere Walzprägen, und/oder Lasern können auch derartige Hölzer besonders vorteilhaft strukturiert werden, so dass auch diese Hölzer im fertig hergestellten Zustand des Dekorelements eine vorteilhafte Haptik und Optik aufweisen.

## Patentansprüche

1. Dekorelement für den Innenraum eines Fahrzeugs, mit wenigstens einem aus Holz gebildeten Dekorteil (10), welches eine dem Innenraum zugewandte und von sich im Innenraum aufhaltenden Fahrzeuginsassen optische wahrnehmbare Oberfläche (12) aufweist, wobei zumindest ein Teilbereich der Oberfläche (12) mit einer mittels eines Lasers und/oder durch Prägen ausgebildeten Oberflächenstrukturierung (14) versehen ist, **dadurch gekennzeichnet, dass** das Dekorteil (10) in dem Teilbereich eine geringere Wanddicke als in einem sich an den Teilbereich anschließenden, weiteren Bereich und/oder wenigstens eine Durchgangsöffnung aufweist, wobei auf einer der Oberfläche abgewandten Seite zumindest ein Farbelement des Dekorelements in Überdeckung mit dem Teilbereich angeordnet ist.

2. Dekorelement nach einem der vorhergehenden Ansprüche, **dadurch gekennzeichnet, dass** das Dekorteil (10) zumindest in dem Teilbereich gebeizt ist.

3. Dekorelement nach einem der vorhergehenden Ansprüche, **dadurch gekennzeichnet, dass** das Holz Fichte, Buche, Birke, Lärche, Douglasie, Erle, Linde, Olivesche oder Pappel ist.

4. Fahrzeug mit einem Innenraum und wenigstens einem im Innenraum angeordneten Dekorelement nach einem der vorhergehenden Ansprüche.

## Claims

1. A decorative element for the interior of a vehicle, with at least one decorative part (10) formed of wood, which has a surface (12) facing the interior which is visually perceptible by vehicle occupants located in the interior, wherein at least a partial region of the surface (12) is provided with surface texturing (14) formed by means of a laser and/or by embossing, **characterised in that** the decorative part (10) in the partial region has a lesser wall thickness than in a further region adjoining the partial region and/or has at least one passage opening, with at least one coloured element of the decorative element being arranged in alignment with the partial region on a side remote from the surface.

2. A decorative element according to one of the preceding claims, **characterised in that** the decorative part (10) is stained at least in the partial region.

3. A decorative element according to one of the preceding claims, **characterised in that** the wood is spruce, beech, birch, larch, Douglas fir, alder, lime, ash or poplar.

4. A vehicle with an interior and at least one decorative element according to one of the preceding claims which is arranged in the interior.

## Revendications

1. Elément décoratif pour l'habitacle d'un véhicule, comprenant au moins une partie décorative (10) réalisée en bois ayant une surface (12) tournée vers l'habitacle et perceptible optiquement par des occupants de l'habitacle, au moins une zone partielle de la surface (12) ayant une structure de surface (14) réalisée au laser et/ou par estampage, **caractérisé en ce que**
la partie décorative (10) a, dans la zone partielle, une épaisseur de paroi plus faible que dans une autre zone adjacente à la zone partielle, et/ou au moins une ouverture de passage, et, sur la face à l'opposé de la face supérieure est munie d'au moins un élément coloré de l'élément décoratif chevauchant la zone partielle.

2. Elément décoratif conforme à la revendication précédente, **caractérisé en ce qu'**
au moins dans la zone partielle de la partie décorative (10) est décapée.

3. Elément décoratif conforme à l'une des revendications précédentes, **caractérisé en ce que**
le bois est de l'épicéa, du hêtre, du bouleau, du mélèze, du Douglas, de l'aulne, du tilleul, de l'olivier, ou du peuplier.

4. Véhicule ayant un habitacle et au moins un élément décoratif conforme à l'une des revendications précédentes dans l'habitacle.
